# EUROPEAN PATENT APPLICATION

(11) **EP 4 465 722 A1**
(43) Date of publication of application: **20.11.2024**
(21) Application number: 22920291.6
(22) Date of filing: 14.01.2022
(51) Int. Cl.: H04W 72/04

(54) **TERMINAL AND BASE STATION**

(71) Applicant: NTT DOCOMO, INC., Tokyo 100-6150 (JP)
(72) Inventor: OKANO, Mayuko, Tokyo 100-6150 (JP); TAKAHASHI, Yuki, Tokyo 100-6150 (JP); OKAMURA, Masaya, Tokyo 100-6150 (JP); KUMAGAI, Shinya, Tokyo 100-6150 (JP); YOSHIOKA, Shohei, Tokyo 100-6150 (JP)
(74) Representative: Hoffmann Eitle
(86) International application number: PCT/JP2022/001198
(87) International publication number: WO 2023/135766

(57) **Abstract**

Abstract : A terminal includes : a communication unit configured to communicate with a base station, that can perform transmission and reception using a same resource, based on configuration of an uplink resource and a downlink resource; and a control unit configured to assume that a specific resource that is a resource of a cell-common channel or signal is notified or configured in accordance with the configuration.

## Description

### Technical Field

The present invention relates to a terminal, a base station and a radio communication system.

### Background Art

A new radio (NR) (also referred to as "5G") which is a successor system of long term evolution (LTE) (also referred to as "4G") is known. In NR, a technology is used that satisfies requirements such as a large-capacity system, a high-speed data transmission rate, low delay, simultaneous connection of a large number of terminals, low cost, and power saving.

In 4G and 5G, both FDD (Frequency Division Duplex) and TDD (Time Division Duplex) can be used as duplex modes. In FDD, basically, DL communication and UL communication can be performed at arbitrary timings, and therefore, there is an advantage that delay is small, but there is a disadvantage that the ratio of the amount of resources between DL and UL is fixed.

On the other hand, in TDD, the ratio between the amount of DL resources and the amount of UL resources is variable, and therefore, there is the advantage that the amount of DL resources can be increased in a general environment where, for example, DL traffic is heavy. However, there is a disadvantage that the amount of UL resources decreases and the delay increases by increasing the amount of DL resources.

In recent years, studies on 5G advanced and 6G have been started in Japan and abroad, and further improvement in communication performances, diversification of use cases, and the like are assumed in 5G-advanced and 6G.

### Related Art Document

### Non-Patent Documents

Non-Patent Document 1: 3GPP TS 38.213 V16.7.0 (2021-09)
Non-Patent Document 2: 3GPP TS 38.331 V16.6.0 (2021-09)

### SUMMARY OF THE INVENTION

### Problems to be Solved by the Invention

For 5G-advanced and 6G, a communication scheme for reducing the disadvantages of FDD and TDD while incorporating the advantages of FDD and TDD is being studied. For example, a communication scheme is under study in which each of a base station and a terminal performs transmission and reception simultaneously using the same time resource and frequency resource. However, in the existing technology, terminal operation in the foregoing communication scheme is not clear, and the terminal may not operate properly in the foregoing communication scheme.

The present invention has been made in view of the above, and an object of the present invention is to provide a technique that enables a terminal to operate properly in a communication system in which both the terminal and a base station can perform transmission and reception simultaneously using the same resource.

### Means for Solving the Problems

According to the disclosed technique, there is provided a terminal including:
a communication unit configured to communicate with a base station, that can perform transmission and reception using a same resource, based on configuration of an uplink resource and a downlink resource; and
a control unit configured to assume that a specific resource that is a resource of a cell-common channel or signal is notified or configured in accordance with the configuration.

### Effects of the Invention

According to the disclosed technique, a technique is provided that enables a terminal to operate properly in a communication scheme in which both the terminal and a base station can perform transmission and reception simultaneously using the same resource.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram for explaining Opt. A-1;
[Fig. 4] FIG. 4 is a diagram for explaining Opt. B-1;
[Fig. 5] FIG. 5 is a diagram for explaining Opt. A-2;
[Fig. 6] FIG. 6 is a diagram for explaining Opt. B-2;
[Fig. 7] FIG. 7 is a diagram for explaining a resource configuration assumed in the embodiment of the present invention;
[Fig. 8] FIG. 8 is a diagram for explaining a problem of a first embodiment;
[Fig. 9] FIG. 9 is a diagram for explaining a basic operation example;
[Fig. 10] FIG. 10 is a diagram for explaining the first embodiment;
[Fig. 11] FIG. 11 is a diagram for explaining the first embodiment;
[Fig. 12] FIG. 12 is a diagram for explaining the first embodiment;
[Fig. 13] FIG. 13 is a diagram for explaining a second embodiment;
[Fig. 14] FIG. 14 is a diagram for explaining the second embodiment;
[Fig. 15] FIG. 15 is a diagram for explaining a problem of a third embodiment;
[Fig. 16] FIG. 16 is a diagram for explaining the third embodiment;
[Fig. 17] FIG. 17 is a diagram showing an example of a functional configuration of a base station 10 according to an embodiment of the present invention;
[Fig. 18] FIG. 18 is a diagram showing an example of a functional configuration of a terminal 20 according to the embodiment of the present invention;
[Fig. 19] FIG. 19 is a diagram showing an example of a hardware configuration of the base station 10 or the terminal 20 according to an embodiment of the present invention; and
[Fig. 20] FIG. 20 is a diagram showing a configuration example of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing NR (e.g., Non-Patent Documents 1 and 2). The radio communication system (the base station 10 and the terminal 20) according to the present embodiment can basically perform an operation according to an existing technical specification. However, in order to solve the problem, the base station 10 and the terminal 20 also perform operations that are not included in the existing technical specification. In the description of embodiments described later, operations and the like that are not in the existing technical specifications are mainly described. Note that the numerical values described below are all examples.

In the embodiment of the present invention, "configuring" a radio parameter or the like may mean that a predetermined value is pre-configured or that a radio parameter notified from the base station 10 or the terminal 20 is configured.

### (System configuration example)

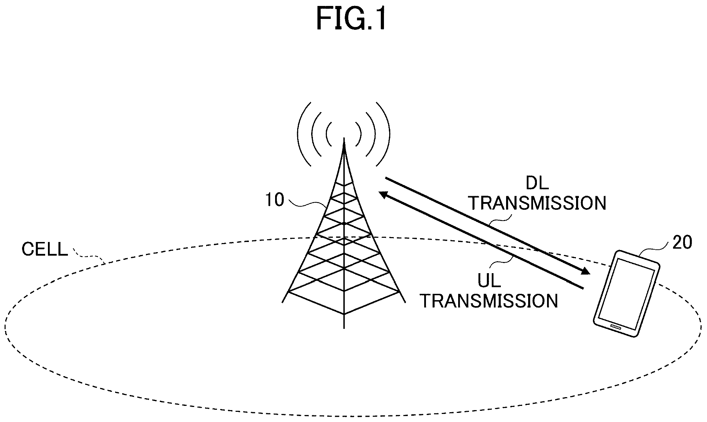

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resources of the radio signal are defined in the time domain and the frequency domain.

OFDM is used as a radio access scheme. In the frequency-domain, at least 15 kHz, 30 kHz, 120 kHz, and 240 kHz are supported as subcarrier spacing (SCS). In the present embodiment, a larger SCS may be supported. Further, a resource block is formed with a predetermined number (for example, 12) of consecutive subcarriers regardless of SCS.

When performing initial access to a cell, for example, the terminal 20 detects SSB (SS/PBCH block), and identifies SCS for PDCCH, PDSCH, PUCCH, or the like, for example, based on PBCH included in the SSB.

In the time domain, a slot is formed with a plurality of OFDM symbols (for example, 14 symbols regardless of the subcarrier spacing). Hereinafter, an OFDM symbol is referred to as a "symbol". A slot is a scheduling unit. Further, a subframe of a 1 ms section is defined, and a frame including 10 subframes is defined. The number of symbols per slot is not limited to 14. Further, as a frame, a frame having a definition different from the frame having the above-described definition may be used.

As illustrated in FIG. 1, the base station 10 transmits control information or data to the terminal 20 in downlink (DL), and receives control information or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA).

Further, each of the base station 10 and the terminal 20 according to the present embodiment can perform transmission and reception using the same time/frequency resource. That is, each of the base station 10 and the terminal 20 has a full-duplex function.

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives control information or data from the base station 10 in DL and transmits control information or data to the base station 10 in UL, thereby using various communication services provided by the radio communication system.

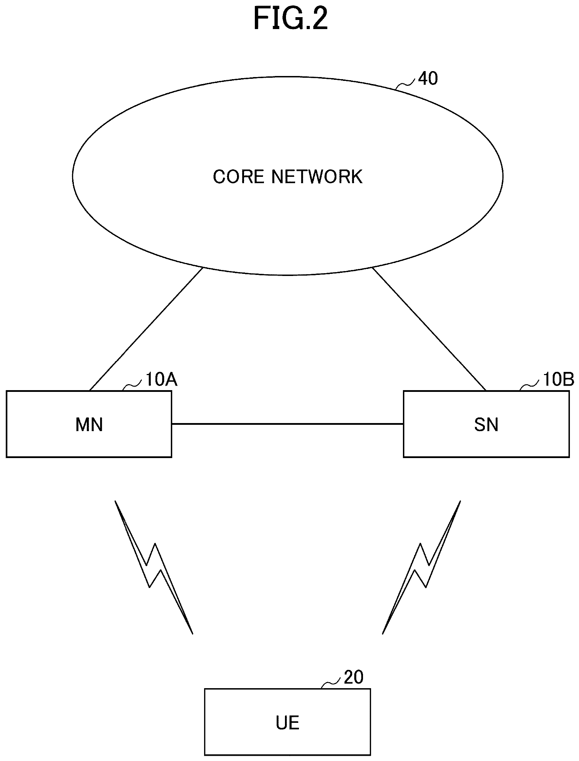

FIG. 2 illustrates a configuration example of a radio communication system in a case where DC (NR-Dual connectivity, for example) is executed. As shown in FIG. 2, the base stations 10A and 10B are provided as a master node (MN) and a secondary node (SN), respectively. The base stations 10A and 10B are connected to a core network. The terminal 20 communicate with both the base stations 10A and 10B.

A cell group provided by the base station 10A serving as the MN is referred to as a master cell group (MCG), and a cell group provided by the base station 10B serving as the SN is referred to as a secondary cell group (SCG). A PCell in a secondary cell group (SCG) may be referred to as a PSCell. The operation in this embodiment may be performed in either of the configurations shown in FIGS. 1 and 2. Also, the DC may be NR-NR DC, NR-LTE DC, or DC other than these.

Furthermore, in DC, a case where CCs are multiplexed between a plurality of base stations to perform transmission and reception may also be referred to as "carrier aggregation". In addition, in the present application, the CC and the cell may be treated as having the same meaning.

In the radio communication system according to the present embodiment, when an unlicensed band is used, LBT (Listen Before Talk) is executed. The base station 10 or the terminal 20 performs transmission when the LBT result indicates "idle", and does not perform transmission when the LBT result indicates "busy".

### (Duplex Scheme)

Introduction/study situations of duplex schemes in 4G, 5G, 6G, and the like will be described. In 4G, a system has been put into practical use by mainly using FDD, and also 4G supports TDD. In 5G, TDD is mainly studied, and FDD is also supported at the same time. For example, migration of an LTE band of FDD to 5G is performed.

In FDD, DL and UL communications can be performed simultaneously, and therefore there is an advantage that delay can be reduced. However, FDD has a disadvantage that the resource ratio between DL and UL is fixed (e.g., 1:1).

In TDD, the amount of resources for DL and UL can be easily changed, which is a merit. For example, in a general environment with a large DL traffic amount, by increasing DL time resource, DL throughput can be improved. However, in TDD, since UL time resources decrease by increasing DL time resources, there is a possibility that delay performance deterioration and UL coverage deterioration occur.

In order to eliminate these disadvantages of FDD and TDD while taking advantage of both FDD and TDD, cross division duplex (XDD) and full duplex (FD) are being studied for 5G-advanced/6G.

XDD refers to simultaneous transmission and reception on the same time and adjacent frequency resources in a base station/terminal. Here, "base station/terminal" means "a base station, or a terminal, or both a base station and a terminal."

FD is to perform transmission and reception simultaneously in the same frequency and time resources in a base station/terminal.

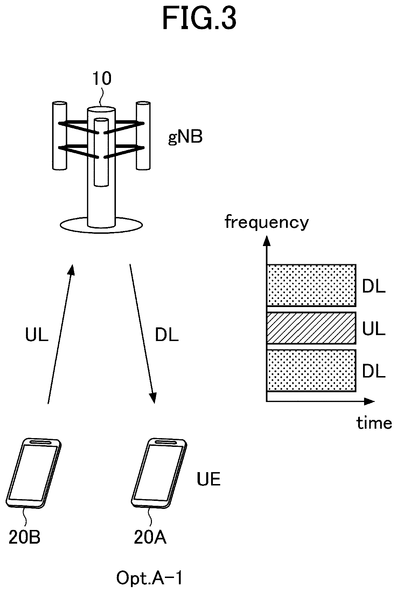

System configuration examples in FD, Opt. A-1, Opt. A-2, Opt. B-1, and Opt. B-2, will be explained with reference to FIGs. 3 to 6. Opt. A-1, Opt. A-2, Opt. B-1, and Opt. B-2 are examples of system configurations classified based on the allocation of UL and DL frequency resources and the support capability of FD by a base station (gNB)/terminal (UE).

Opt. A-1/B-1 is a system in which frequency resources do not overlap between DL and UL, and may be referred to as subband based FD. Opt. A-2/B-2 is a system in which frequency resources overlap between DL and UL, and may be referred to as spectrum sharing FD. Hereinafter, each of Opt. A-1, Opt. A-2, Opt. B-1, and Opt. B-2 will be described. In each of the drawings for explaining these, the left side of the drawing shows UL and DL communications between the base station 10 and the terminal 20, and the right side of the drawing shows allocation of UL and DL frequency resources.

FIG. 3 shows an example of the system configuration in Opt. A-1. As shown in FIG. 3, frequency resources are divided between DL and UL. In addition, only one-way communication is assumed at the same time in the same terminal. FIG. 3 shows that terminals 20B and 20A perform UL communication and DL communication, respectively, at the same time. In Opt. A-1, information indicating which frequency resource is DL or UL at which time is configured for each system. The system here is a system including the base station 10 and the terminal 20.

Opt. A-1 is different from FDD in that DL-only or UL-only is available in Opt. A-1 and that there is a gap between bands.

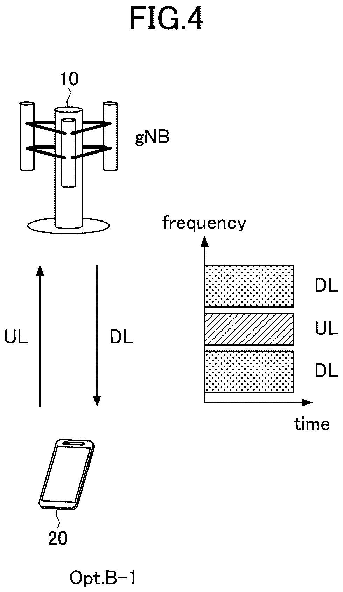

FIG. 4 shows an example of the system configuration of Opt. B-1. As shown in FIG. 4, frequency resources are divided between DL and UL. Bidirectional communication at the same time is assumed in the same terminal. In Opt. B-1, information indicating which frequency resource is DL or UL at which time is configured for each system.

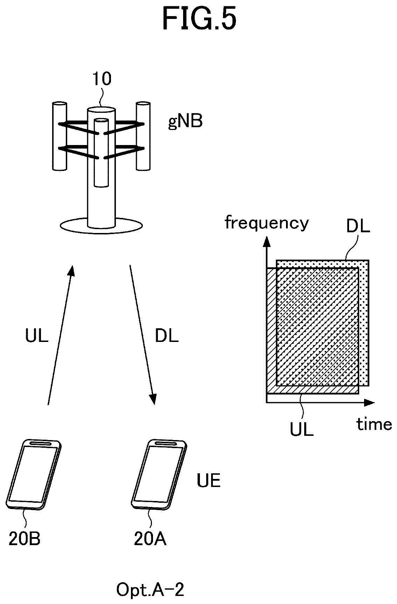

FIG. 5 shows an example of the system configuration in Opt. A-2. As shown in FIG. 5, frequency resources overlap between DL and UL. However, only one-way communication is assumed at the same time in the same terminal. In Opt. A-2, information indicating which frequency resource is DL or UL at which time is configured for each system or each terminal. However, by clarifying the operation at the time of collision, information (which may be referred to as a pattern) indicating which frequency resource is DL or UL at which time may be left as not configured.

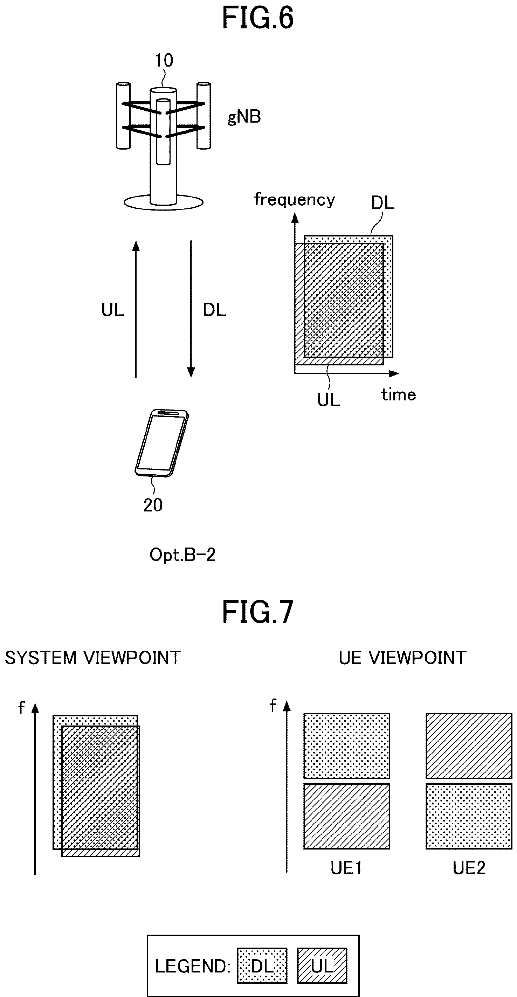

FIG. 6 shows an example of the system configuration of Opt. B-2. As shown in FIG. 6, frequency resources overlap between DL and UL. Bidirectional communication at the same time is assumed in the same terminal. In Opt. B-2, information indicating which frequency resource is DL or UL at which time may be configured for each system or each terminal, or information indicating which frequency resource is DL or UL at which time may be left as not configured.

### (System configuration assumed in the present embodiment)

In the present embodiment (including first to third embodiments described later), Opt. B-2 shown in FIG. 6 is assumed to be used. However, the application destination of the technique in the present embodiment is not limited to Opt. B-2, and the technique in the present embodiment may be applied to systems of other options.

In the following description, "channel/signal" means "channel, or signal, or both channel and signal." Additionally, expressions such as transmitting a channel/signal, receiving a channel/signal, etc., are used in this specification. Here, "transmitting a channel" can be rephrased as transmitting data (or information, or signal) using a channel. Similarly, "receiving a channel" can be rephrased as receiving data (or information, or signal) using a channel.

Additionally, "time/frequency" means "time, or frequency, or both time and frequency." "Resource," unless otherwise clear from the context, means "time/frequency resource." "Transmission/reception" means "transmission, or reception, or both transmission and reception." "Transmission/reception" can also be replaced with "transmitting and receiving " or "communication." "DL/UL" means "DL, or UL, or both DL and UL."

Hereinafter, a first embodiment, a second embodiment, and a third embodiment will be described. The first embodiment, the second embodiment, and the third embodiment can be implemented in any combination. Problems and operations of the respective embodiments will be described.

### (Problem of first embodiment)

In Opt. B-2 which is a premise in the present embodiments (first embodiment to third embodiment), basically, frequency resources overlap between DL and UL, and the same terminal is assumed to perform bidirectional communication. To be more specific, as shown in FIG. 7, although full duplex is employed from the system viewpoint (base station viewpoint), it can be considered to make it configurable which frequency resource is used as DL/UL on a per terminal basis. In the first embodiment, such configuration is performed.

In this case, depending on a DL/UL configuration for each terminal, there is a possibility that a channel/signal (example: SSB, CORESET#0, SIB, type0/1/2/3 CSS, RACH preamble, PUCCH before RRC connection and the like) transmitted and received in a configuration of a cell-common time-frequency resource cannot be transmitted and received. The term "cell-common" means "common in a cell formed by the base station 10". However, the present embodiment is not limited to "cell-common", and for example, "cell-common" may be replaced with "group-common". The term "group-common" means "common to a group including a plurality of terminals."

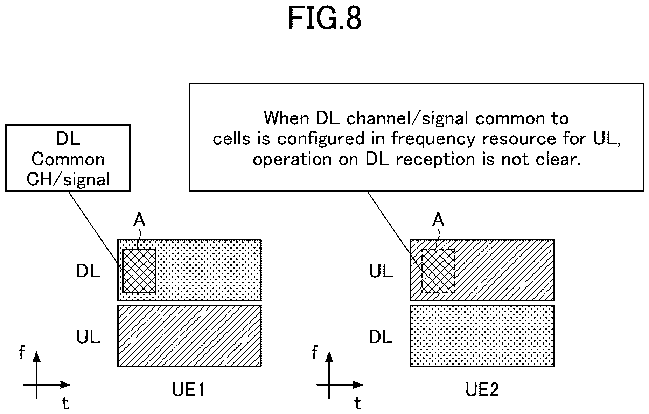

An example will be described with reference to FIG. 8. When a cell-common DL channel/signal is transmitted from the base station 10 by the cell-common resource A, UE1 in which a resource including the resource A is configured as a DL resource can receive the channel/signal. However, since the resource A is not configured as a DL resource for UE2, UE2 cannot receive the channel/signal.

Even when resources for DL/UL are configured for each terminal, each terminal needs to be able to transmit and receive a cell-common channel/signal.

### (Operation of first embodiment)

Therefore, in the first embodiment, an operation for configuring a resource of a cell-common channel/signal in accordance with a DL/UL configuration of the terminal 20 will be described.

In the first embodiment, it is possible to configure which time/frequency resource is for DL or UL for each terminal. In this specification, the information indicating which time/frequency resource is for DL/UL is referred to as an "FDD/XDD pattern." Additionally, a "time/frequency resource" means "a time resource, a frequency resource, or a time and frequency resource."

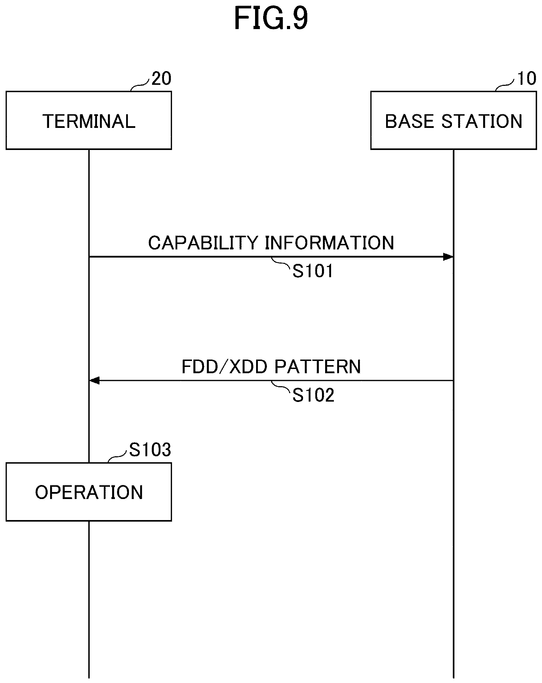

First, an example of a basic operation including configuration of an FDD/XDD pattern will be described with reference to FIG. 9. The operation of FIG. 9 can be applied to the second embodiment and the third embodiment.

In S101 of FIG. 9, the terminal 20 transmits capability information (UE capability) to the base station 10. The capability information transmitted in S101 is, for example, information of an UL/DL bandwidth supported by the terminal 20. Note that S101 may not be performed.

In S102, the base station 10 notifies/configures the terminal 20 of/with an FDD/XDD pattern. The FDD/XDD pattern includes, for example, information indicating time/frequency resources of each of UL and DL which can be used by the terminal 20. The "notify/configure" means "notify, or configure, or both notify and configure". The "notify" is, for example, to perform instruction by DCI, MAC CE, or the like. The "configure" is, for example, to perform configuration by RRC signaling.

In S103, the terminal 20 performs an operation based on the FDD/XDD pattern. In S103, for example, an operation described in the second embodiment and the third embodiment to be described later are performed.

The terminal 20 does not assume reception of a channel/signal in a time/frequency resource outside a DL time/frequency resource notified/configured in S102. In addition, the terminal 20 does not assume transmission of a channel/signal in a time/frequency resource outside an UL time/frequency resource notified/configured in S102.

However, the terminal 20 may perform measurement of a reference signal, a synchronization signal, or the like in a time/frequency resource outside the notified/configured DL time/frequency resource. The terminal 20 reports the measurement result to the base station 10, and the base station 10 may configure a DL time/frequency resource (referred to as a new DL time/frequency resource) different from the already configured DL time/frequency resource for the terminal 20. After receiving this configuration, the terminal 20 performs DL reception using the new DL time/frequency resource.

### <About FDD/XDD pattern>

The FDD/XDD pattern notified/configured from the base station 10 to the terminal 20 may be different for each terminal, may be different in units of groups of terminals, or may be common to all terminals in the cell, both at the time of initial access and after initial access.

The FDD/XDD pattern notified/configured to the terminal 20 from the base station 10 may be common to all terminals in the cell at the time of initial access, and may be different for each terminal after the initial access.

The FDD/XDD pattern used at the time of initial access is notified/configured from the base station 10 to the terminal 20 by one or both of DCI and SIB at the time of starting (or before starting) the initial access, for example.

The FDD/XDD pattern to be used after the initial access may be notified/configured from the base station 10 to the terminal 20 by one or both of DCI and a higher layer parameter. The higher layer parameter may be notified/configured by RRC signaling or MAC CE.

In any of the above cases, an FDD/XDD pattern corresponding to the capability information reported by the terminal 20 to the base station 10 may be notified/configured from the base station 10 to the terminal 20. For example, as the capability information, a maximum value of a bandwidth supported by the terminal 20 for each of DL and UL is reported to the base station 10, and the base station 10 notifies/configures the terminal 20 of/with an FDD/XDD pattern of the bandwidth equal to or less than the bandwidth.

Further, a plurality of FDD/XDD patterns may be configured from the base station 10 to the terminal 20, and the terminal 20 may select an appropriate configuration according to its own capability. For example, when a plurality of FDD/XDD patterns of a plurality of bandwidths are notified/configured, the terminal 20 selects an FDD/XDD pattern of a bandwidth equal to or less than the bandwidth supported by the terminal 20.

### <Resources of cell-common channel/signal>

In a case where the FDD/XDD pattern notified/configured from the base station 10 to the terminal 20 is different for each terminal, the terminal 20 assumes that the terminal 20 is notified/configured of/with a time/frequency resource of a cell-common channel/signal in accordance with a configuration of the FDD/XDD pattern of the terminal 20. The term "assume" means, for example, receiving (or searching for) information of a time/frequency resource transmitted from the base station 10 at a timing at which the time/frequency resource of the cell-common channel/signal is notified/configured.

For example, in S102 of FIG. 9, the base station 10 notifies/configures the terminal 20 of/with an FDD/XDD pattern and a time-frequency resource of a cell-common channel/signal corresponding to the FDD/XDD pattern. The terminal 20 transmits and receives the cell-common channel/signal using the time/frequency resource of the cell-common channel/signal.

Note that the FDD/XDD pattern and the time/frequency resource of the cell-common channel/signal may be separately notified/configured. From the viewpoint of the base station 10, the base station 10 determines the time/frequency resource of the cell-common channel or signal based on the FDD/XDD pattern for the terminal 20, and notifies/configures the terminal 20 of/with the time/frequency resource.

The cell-common channel/signal may be at least one of SSB/SIB/RACH occasion/PUCCH before RRC connection/type0,0A,1,2,3-PDCCH CSS, or may be other channels/signals.

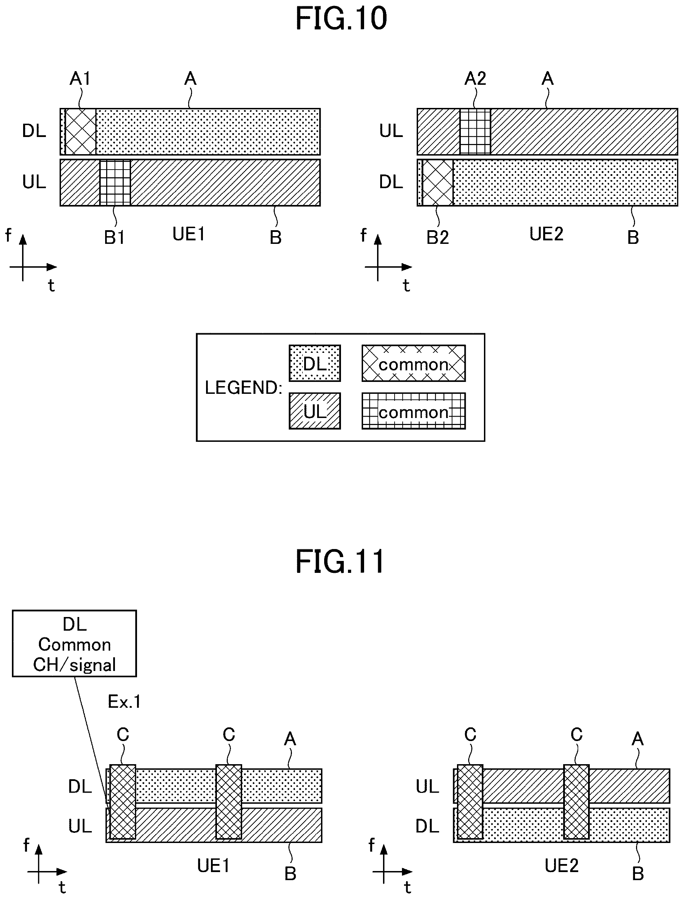

FIG. 10 illustrates a configuration example of FDD/XDD patterns and time-frequency resources of a cell-common channel/signal for UE1 and UE2. In the example of FIG. 10, the time-frequency resource indicated by A is a DL resource for UE1 and is also an UL resource for UE2. In addition, a time-frequency resource indicated by B is an UL resource for UE1 and a DL resource for UE2.

For UE1 (or a UE group including the UE1), a resource indicated by A1 is notified/configured as a resource of a DL cell-common channel/signal, and a resource indicated by B1 is notified/configured as a resource of an UL cell-common channel/signal. For UE2 (or a UE group including the UE2), a resource indicated by A2 is notified/configured as a resource of an UL cell-common channel/signal, and a resource indicated by B2 is notified/configured as a resource of a DL cell-common channel/signal.

The UE1 receives a DL cell-common channel/signals using the resource A1 and transmits an UL cell-common channel/ signal using the resource B1. The UE2 receives an UL cell-common channel/signal using the resource A2 and receives a DL cell-common channel/signal using the resource B2.

### <Method for configuring/notifying resource of cell-common channel/signal>

A time/frequency resource of a cell-common channel/signal used in the initial access is notified/configured from the base station 10 to the terminal 20 by, for example, one or both of DCI and SIB.

A time/frequency resource of a cell-common channel/signal after the initial access may be notified/configured from the base station 10 to the terminal 20 by one or both of DCI and a higher layer parameter. The higher layer parameter may be notified by RRC signaling or MAC CE.

In any of the above-described cases, a time/frequency resource of a cell-common channel/signal according to the capability information reported by the terminal 20 to the base station 10 may be notified/configured from the base station 10 to the terminal 20.

Further, for a certain cell-common channel/signal, a plurality of time/frequency resources may be configured from the base station 10 to the terminal 20, and the terminal 20 may select an appropriate time/frequency resource in accordance with the configuration of the FDD/XDD pattern of the terminal 20.

In addition, for a certain cell common channel/signal, only some parameters among a plurality of parameters for designating a time/frequency resource may be notified/configured for each terminal. For example, only a parameter related to the frequency resource is configured for each terminal, and the other parameters (time resource, period, etc.) common terminals are configured. The parameters common to the terminals may be defined in a technical specification and may not be notified/configured from the base station 10 to the terminal 20.

In addition, after a plurality of parameters common to terminals are notified/configured from the base station 10 to the terminal 20, some parameters among the plurality of parameters may be overwritten (updated) with one or both of DCI and a higher layer parameter.

### <Example of resources of other cell-common channel signals>

For example, when a time/frequency resource is already defined for a certain cell-common channel/signal, the base station 10 may notify/configure each terminal of/with a DL/UL time/frequency resource in accordance with the defined time/frequency resource.

Furthermore, the terminals may share a DL/UL time/frequency resource, and a cell-common channel/signal may be transmitted and received by the shared resource.

The DL/UL time/frequency resource shared between the terminals for transmission and reception of the cell-common channel/signal may be notified/configured from the base station 10 to the terminal 20, or may be defined in the technical specification and may not be notified/configured from the base station 10 to the terminal 20. In addition, regarding the DL/UL time/frequency resource shared between the terminals, each terminal may be able to use the time/frequency resource temporarily, periodically, or constantly.

Each terminal transmits and receives a cell-common channel/signal using a DL/UL time/frequency resource shared between terminals.

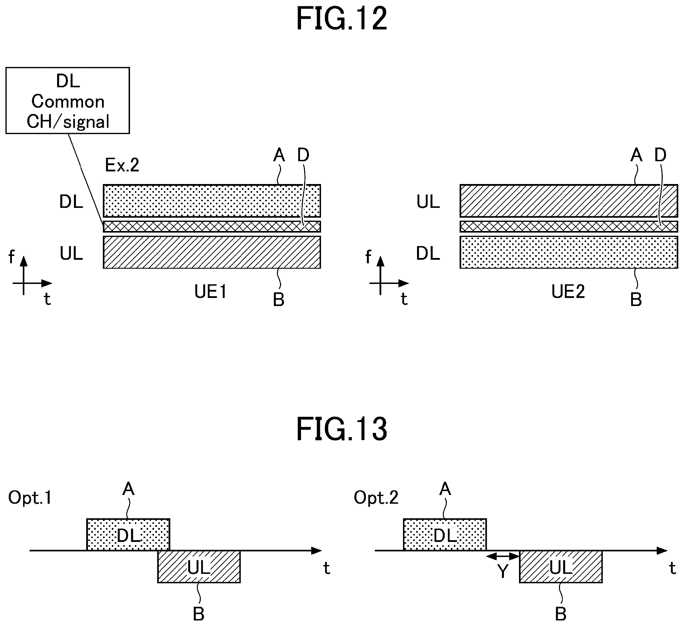

Examples of DL resources shared between terminals in the same FDD/XDD pattern as the FDD/XDD pattern shown in FIG. 10 are shown in FIG. 11 and FIG. 12. In the example of FIG. 11, DL resource C is configured to overlap with DL resource A and UL resource B configured in UE1. The same applies to UE2.

In the example of FIG. 12, DL resource D is configured in a frequency-domain between DL resource A and UL resource B that are configured in UE1. The same applies to UE2.

### <Effects of first embodiment>

By the technique according to the first embodiment, each terminal can appropriately transmit and receive a cell-common channel/signal even when a FDD/XDD pattern is notified/configured.

### (Problem of second embodiment)

Next, a second embodiment will be described. First, the problem will be described. As in the case illustrated in Figs. 11 and 12 of the first embodiment, when a DL/UL time/frequency resource of each terminal is configured in accordance with a time/frequency resource of a cell-common channel/signal, a time/frequency resource of a UE-specific channel/signal scheduled/configured in the terminal 20 in advance and a time/frequency resource of a cell-common channel/signal may overlap. When resource overlap occurs in this way, there is a possibility that one channel/signal cannot be transmitted or received.

In addition, in Opt. B-2, a case is considered where which time/frequency resource is set as DL/UL is not configured at all. For example, a case where DL/UL frequency resources overlap in each of the system viewpoint and the UE viewpoint is considered.

Here, in Opt. B-2, it is assumed that each terminal supports FD (full duplex), but there is a possibility that it is necessary to consider a restriction due to an analog beam, power control, or the like at the time of simultaneous transmission and reception of DL and UL. That is, the terminal 20 may not appropriately perform simultaneous transmission and reception of DL and UL due to the restriction.

As described above, in the present embodiment assuming Opt. B-2, in the terminal 20, any of collision between DL reception and DL reception (DL-DL collision), collision between UL transmission and UL transmission (UL-UL collision), and collision between DL reception and UL transmission (DL-UL collision) may occur, but an operation at the time of collision is not clear.

### (Operation of second embodiment)

In the second embodiment, an operation at the time of DL-DL/UL-UL/DL-UL collision in the terminal 20 will be described. More specifically, operations at the time of DL-DL/UL-UL/DL-UL transmission and reception timing collision will be described. The collision of transmission and reception timings may be rephrased as a collision of communication timings. Further, collision of transmission and reception timings of channels/signals may be rephrased as collision of channels/signals.

The operation of the second embodiment corresponds to, for example, the operation in S103 after notification/configuration of the FDD/XDD pattern and the cell-common channel/signal resource is performed in S102 in the sequence illustrated in FIG. 9.

The operation of the second embodiment may be an operation in a case where the notification/configuration of the FDD/XDD pattern is not performed.

That is, the operation of the second embodiment may be an operation based on the first embodiment or an independent operation not based on the first embodiment.

### <Definition of transmission and reception timing collision>

The terminal 20 may determine that a collision of transmission and reception timings occurs when any one of option cases of Opt. 1 and Opt. 2 occurs. In the following description, the terminal 20 is the subject of the determination, but the base station 10 can also make the same determination.

Opt. 1: In any of the cases of DL-DL, UL-UL, and DL-UL, the terminal 20 determines that a collision of transmission and reception timings occurs when time resources for performing transmission and reception of a channel/signal overlap at least partially.

An example of Opt. 1 is shown on the left side of FIG. 13. Here, an example is shown of a case where a collision occurs between DL resource A and UL resource B.

Opt. 2: In any of the cases of DL-DL, UL-UL, and DL-UL, even when time resources for transmitting and receiving a channel/signal do not overlap, it may be determined that collision of transmission and reception timings has occurred.

For example, when an interval between channels/signals for continuously performing transmission and reception is not sufficient in any of DL-DL, UL-UL, and DL-UL, the terminal 20 determines that a collision of the transmission and reception timings occurs. The "insufficient interval" means, for example, that the interval is equal to or less than a threshold value X. X may be in units of ms, symbols, slots, or other units.

An example of Opt. 2 is shown on the right side of FIG. 13. Here, it is assumed that the interval Y between DL resource A and UL resource B is equal to or less than the threshold X.

In any of the cases of DL-DL, UL-UL, and DL-UL, the interval between resources may be a length from the end of the first resource to the start end of the next resource as shown in the right side of FIG. 13, a length from the center of the first resource to the center of the next resource, or other lengths.

The resource of the target for collision determination may be a resource autonomously selected by the terminal 20, a resource defined in advance for transmission/reception of a channel/signal, or a resource allocated by DCI or the like from the base station 10.

For example, in the example of FIG. 13, when both UL resource B and DL resource A are resources allocated by configuration information or control information from the base station 10, the terminal 20 can determine whether or not a collision occurs from the configuration information or the control information.

Further, for example, when one or both of UL resource B and DL resource A are predefined resources that periodically arrive, the terminal 20 may determine that a collision occurs at a certain timing and determine that a collision does not occur at another timing.

### <Difference in operation for type of channel/signal>

In any of the cases of DL-DL, UL-UL, and DL-UL, different operations are defined (or notified/configured from the base station 10) depending on between which channels/signals the collision occurs, and the terminal 20 may operate according to the definition (or notification/configuration).

For example, in a time interval in which the terminal 20 measures a DL signal such as SSB or CSI-RS, the terminal 20 may not assume UL transmission. Since the terminal 20 does not perform UL transmission in the time interval (or the interval within a threshold X from the time interval) in which the terminal 20 measures the DL signal such as the SSB or the CSI-RS, the terminal 20 can determine that the collision related to UL does not occur in the time interval (or the interval within the threshold X from the time interval).

### <Difference in operation in accordance with terminal capability>

In any of the cases of DL-DL, UL-UL, and DL-UL, different operations may be defined (or notified/configured) according to the capability of the terminal 20.

For example, the terminal 20 reports a UE capability indicating whether or not simultaneous transmission and reception without restriction is supported to the base station 10 for one or more of DL-DL, UL-UL, and DL-UL. For example, the terminal 20 that supports simultaneous transmission and reception without restriction may not assume collision between channels/signals.

In addition, for example, for any one or any plurality of DL-DL, UL-UL, and DL-UL, the terminal 20 reports, to the base station 10, a UE capability indicating for which channel/signal pair the terminal supports simultaneous transmission and reception. For example, the terminal 20 may not assume collision between channels/signals for a pair of channels/signals for which the terminal 20 supports simultaneous transmission and reception.

### <Operation at the time of collision>

In any of the cases of DL-DL, UL-UL, and DL-UL, the terminal 20 may perform any operation of Opt. 1 and Opt. 2 below when the terminal 20 determines that collision between channels/signals occurs. The base station 10 may notify/configure the terminal 20 of/with which operation of Opt. 1 and Opt. 2 to perform.

In Opt. 1, the terminal 20 may simultaneously transmit and receive both of the two collided channels/signals. As more detailed examples of Opt. 1, Opt. 1-1 and Opt. 1-2 will be described. Which operation of Opt. 1-1 and Opt. 1-2 to perform may be notified/configured from the base station 10 to the terminal 20. Opt. 1-1 and Opt. 1-2 may be combined and carried out. The "simultaneous transmission and reception of both of two collided channels/signals" includes not only the case where two resources overlap as shown in Opt. 1 of FIG. 13, but also the case where two resources are apart from each other and transmission and reception are performed using these two resources at the time of collision as shown in Opt. 2 of FIG. 13.

### <Opt.1-1>

In a case where simultaneous transmission and reception are performed between UL and UL or between DL and UL, the terminal 20 may change UL transmission power of at least one of two channels/signals that collide with each other from UL transmission power of the channels/signals in an interval in which the two channels/signals do not collide with each other.

For example, when a channel/signal for which UL transmission power is changed is channel C/signal C, the terminal 20 sets the UL transmission power at the time of collision of the channel C/signal C to be larger (or smaller) than the UL transmission power at the time of non-collision of the channel C/signal C. By increasing the UL transmission power of a channel/signal, for example, the base station 10 can easily receive the channel/signal. By reducing the UL transmission power of a channel/signal, for example, it is possible to reduce interference of the channel/signal against DL reception by another terminal.

Furthermore, a power control formula that is applied at the time of simultaneous transmission and reception between UL and UL or between DL and UL may be defined in the technical specifications, or may be notified from the base station 10 to the terminal 20 by higher layer signaling (RRC, MAC CE, etc.). In addition, in the power control formula, a term that takes into account DL-UL interference (DL-UL collision) may be added. In addition, in the power control formula, a term that takes into account UL-UL interference (UL-UL collision) may be added.

For example, when the terminal 20 detects DL-UL interference, the terminal 20 dynamically increases the transmission power at a transmission occasion N symbols/slots after or at a next transmission occasion by X dBm. Alternatively, when the terminal 20 detects the DL-UL interference, the terminal 20 may dynamically increase the transmission power at a transmission occasion N symbols/slots after or later, or at the next transmission opportunity or later by X dBm. The operation of increasing the transmission power by X dBm assumes an accumulation operation such as a TPC command.

Note that N is an integer equal to or greater than 0. X is a real number. X may be negative. In a case where X is negative, this corresponds to a case where the transmission power is lowered. Both of N and X may be defined in the technical specification, or may be notified/configured to the terminal 20 from the base station 10.

In addition, the terminal 20 may dynamically reduce the UL transmission power in an interval in which collision with DL reception does not occur in order to reduce power consumption. This operation may be to assume that the term that considers DL-UL interference in the above Power control formula is invalid or 0.

### <Opt.1-2>

Next, Opt. 1-2 will be described. In any of the cases of DL-DL, UL-UL, and DL-UL, when the terminal 20 simultaneously transmits and receives two channels/signals, the terminal 20 may change a transmission/reception beam of at least one channel/signal of the two channels/signals that collide from a transmission/reception beam at the time of non-collision. For example, when performing simultaneous transmission and reception of two channels/signals, if there is a restriction that two beams should be the same, the two beams may be changed to be the same.

Regarding the method of selecting a beam when changing, beam candidates to be changed may be configured/notified in advance, and the terminal 20 may select one beam from the candidates and change the beam. The beam candidates of the change destination may be defined in the technical specification, may be notified by DCI/higher layer parameter, or may be a combination thereof. When the beam is defined/notified/configured, the beam may be designated by an index of SSB or an index of a reference signal such as CSR-RS.

In a case where the beams are different between DL and UL at the time of non-collision, the terminal 20 may change an UL beam such that a DL beam and the UL beam become the same at the time of collision between DL and UL. The DL and UL beams becoming the same may mean that beam correspondence is established between DL and UL.

When the terminal 20 performs beam switching of an UL channel/signal, the terminal 20 may change a time resource for performing UL transmission from a scheduled or configured time resource in consideration of an interval/time required for the beam switching. In this case, the terminal 20 performs transmission using the changed beam in the changed time resource.

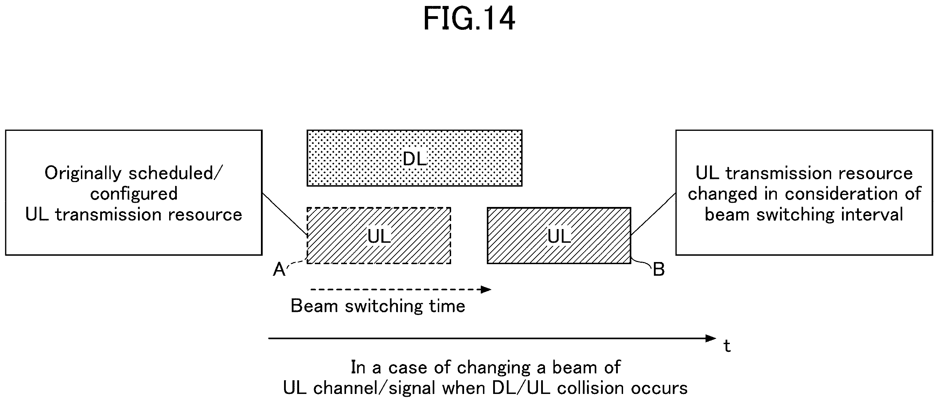

FIG. 14 shows an example of collision between DL and UL. In FIG. 14, UL resource A that is originally scheduled/configured is changed to UL transmission resource B after a beam switching interval/time.

The size of the beam switching interval/time may be defined in the technical specification, may be notified by a higher layer parameter, may be reported by UE capability, or may be a combination thereof. The unit of the beam switching interval/time specified/notified/configured/reported may be ms, symbol, slot, or other units.

Further, the UL resource after the change which is changed in consideration of the beam switching interval/time may be a resource autonomously selected by the terminal 20, may be a resource defined in advance for transmission of a channel/signal, or may be a resource allocated by the base station 10 using DCI or the like.

### <Opt.2>

Next, Opt. 2 will be described. In Opt. 2, priorities of two channels/signals that collide with each other are defined/configured, and the terminal 20 may not transmit/receive one of the channels/signals having a higher (or lower) priority. Not transmitting/receiving a channel/signal may be expressed as dropping the channel/signal.

The priority may be defined in the technical specification, may be notified from the base station 10 to the terminal 20 by DCI/higher layer signaling, or may be a combination thereof.

For example, the following priorities between channels/signals may be defined/notified/configured.

- Scheduled DL (e.g., Dynamic PDSCH, CSI-RS) and configured UL (e.g., SRS, PUCCH, CG PUSCH, RACH occasion)
- Scheduled DL (e.g., Dynamic PDSCH, CSI-RS) and scheduled UL (e.g., dynamic PUSCH, PUCCH)
- Configured DL (e.g., PDCCH, SPS PDSCH) and configured UL (e.g., SRS, PUCCH, CG PUSCH, RACH occasion)
- Configured DL (e.g., PDCCH, SPS PDSCH) and scheduled UL (e.g., dynamic PUSCH, PUCCH)
- SSB and UL (e.g., PUSCH, PUCCH, PRACH, SRS)
- DL (e.g., PDSCH, PDCCH, CSI-RS) and RACH occasion
- DL and DL (e.g., among SSB, PDSCH, PDCCH, CSI-RS)
- UL and UL (e.g., among PUSCH, PUCCH, SRS, RACH)

For a channel/signal that is not transmitted/received at the time of collision, a transmission/reception resource related to the collision may be changed, and transmission/reception may be performed using the changed resource. The changed resource may be defined in the technical specification, may be notified by higher layer signaling, or may be notified by DCI.

In any of the above cases, the time/frequency resource after the change may be a time/frequency resource shifted by n slots from the slot of the time/frequency resource before the change (the scheduled/configured time /frequency resource). The "n" is, for example, an integer equal to or greater than 0. The "n" may be defined in the technical specification, may be notified by higher layer signaling, or may be notified by DCI.

### <Effects of second embodiment>

The technique of the second embodiment enables the terminal to operate appropriately even when the communication timings collide with each other.

### (Problem of third embodiment)

Next, a third embodiment will be described. The third embodiment may be carried out in combination with one or both of the first embodiment and the second embodiment, or may be carried out independently. First, the problem will be described.

In the existing technical specifications, the terminal 20 determines an UL transmission timing in the terminal 20 so as to be synchronized with DL and UL frame timings in the base station 10.

Specifically, a timing advance (TA) command is notified from the base station 10 to the terminal 20 for UL transmission timing control of the terminal 20, and the terminal 20 determines the UL transmission timing by using a TA offset based on the notified information. The terminal 20 assumes receiving the TA command by RAR or

### MAC-CE.

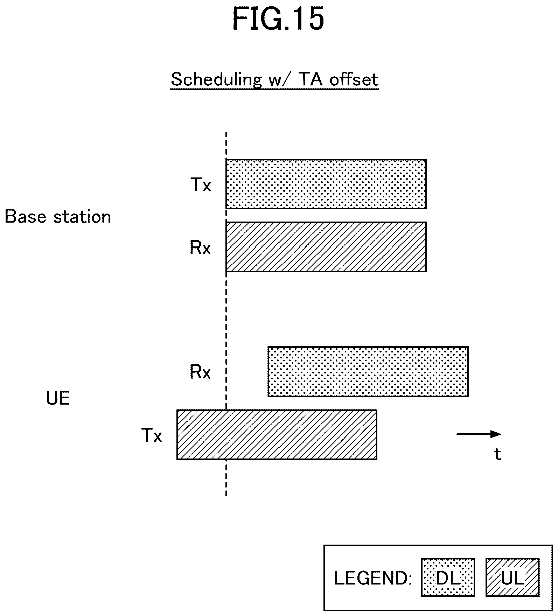

FIG. 15 shows an example of a case where the TA offset is used. In the example of FIG. 15, the terminal 20 performs transmission (Tx) by using a TA offset before reception (Rx) timing so that frame timings of reception and transmission are aligned in the base station 10.

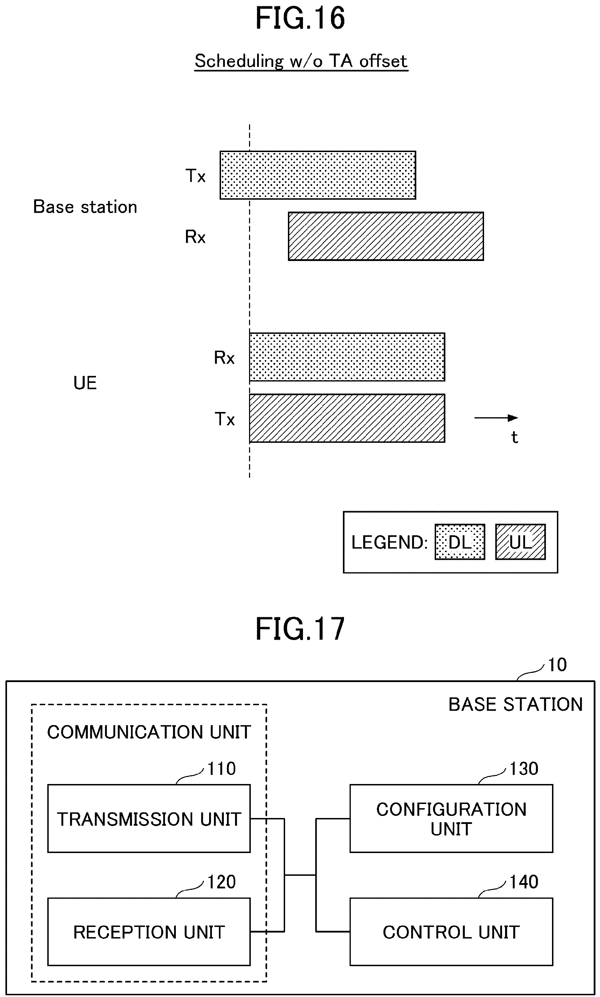

On the other hand, in a system supporting FD, the base station 10 can perform scheduling without considering the TA, and for example, the terminal 20 may determine the UL transmission timing such that DL and UL frame timings in the terminal 20 are aligned. FIG. 16 illustrates an example of a case where the terminal 20 performs transmission and reception by determining an UL transmission timing so that DL and UL frame timing are aligned.

That is, in the third embodiment, it is assumed that the terminal 20 determines an UL transmission timing without considering the TA offset. However, the operation related to UL transmission in the case where TA is not considered is not clear.

### (Operation of third embodiment)

In the third embodiment, it is assumed that the terminal 20 is not notified of a TA command from the base station 10. Alternatively, it is assumed that the terminal 20 determines an UL transmission timing without applying a TA offset notified from the base station 10. That is, the terminal 20 determines an UL transmission timing of a channel/signal without applying a TA offset.

The terminal 20 may not apply a TA offset to all channels/signals, or whether to apply a TA offset may differ for each channel/signal.

Which channel/signal a TA offset is applied to for UL transmission may be defined in the technical specification, may be notified from the base station 10 to the terminal 20 by higher layer signaling (example: RRC, MAC CE), may be notified from the base station 10 to the terminal 20 by DCI, or may be a combination thereof.

] For example, when channels/signals related to UL transmission are multiplexed between the terminal 20 and another terminal, an UL transmission timing is determined by applying a TA offset so that reception timings of UL from these terminals at the base station 10 are aligned. On the other hand, for other UL transmissions, the UL transmission timing is determined without considering the TA offset.

Further, UE capability indicating whether or not an operation of determining an UL transmission timing without considering a TA offset is supported may be defined, and the UE capability may be reported from the terminal 20 to the base station 10.

### <Effects of third embodiment>

By the technique according to the third embodiment, the terminal 20 can appropriately perform UL transmission in a case where TA is not considered.

### (Apparatus Configuration)

Next, functional configuration examples of the base station 10 and the terminal 20 that execute the processes and operations described above will be described.

### <Base station 10>

FIG. 17 is a diagram illustrating an example of a functional configuration of the base station 10. As illustrated in FIG. 17, the base station 10 includes a transmission unit 110, a reception unit 120, a configuration unit 130, and a control unit 140. The functional configuration shown in FIG. 17 is merely an example. The functional sections and the names of the functional units may be any as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver. The control unit 140 may be referred to as a processor.

### <Terminal 20>

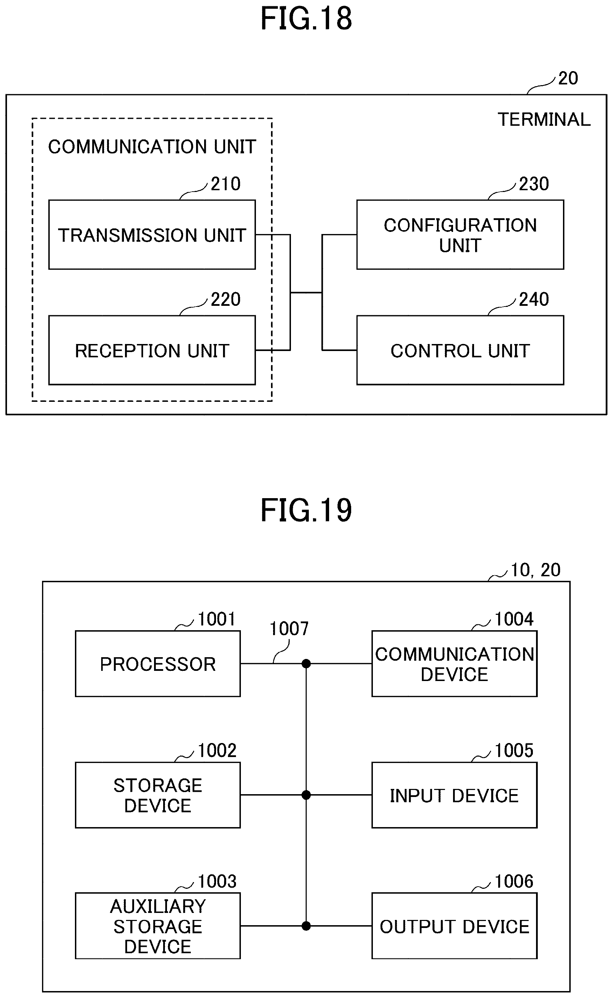

FIG. 18 is a diagram illustrating an example of a functional configuration of the terminal 20. As illustrated in FIG. 18, the terminal 20 includes a transmission unit 210, a reception unit 220, a configuration unit 230, and a control unit 240. The functional configuration shown in FIG. 18 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 120 may receive the PSCCH, the PSSCH, the PSDCH, the PSBCH, or the like from other terminals 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The control unit 240 can control communication operation performed by the communication unit. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver. The control unit 240 may be referred to as a processor.

### <Supplementary note 1>

In relation to the first embodiment and the third embodiment, at least a terminal and a base station described in the following items 1 to 6 are provided.

### (Item 1)

A terminal including:
a communication unit configured to communicate with a base station, that can perform transmission and reception using a same resource, based on configuration of an uplink resource and a downlink resource; and
a control unit configured to assume that a specific resource that is a resource of a cell-common channel or signal is notified or configured in accordance with the configuration.

### (Item 2)

The terminal as described in item 1, wherein the specific resource for use at a time of initial access and the specific resource for use after initial access are notified or configured to the terminal using different methods.

### (Item 3)

The terminal as described in item 1 or 2, wherein, when a plurality of specific resources are notified or configured to the terminal, the control unit selects a specific resource to use among the plurality of specific resources based on the uplink resource or the downlink resource.

### (Item 4)

The terminal as described in any one of items 1 to 3, wherein, after the specific resource is notified or configured to the terminal using a plurality of parameters, the communication unit receives a parameter related to the specific resource, and updates a part of parameters among the plurality of parameters with the received parameter.

### (Item 5)

The terminal as described in any one of items 1 to 4, wherein the control unit determines an uplink transmission timing without applying a TA offset.

### (Item 6)

A base station comprising:
a communication unit configured to be able to perform transmission and reception using a same resource with a terminal; and
a control unit configured to determine a specific resource that is a resource of a cell-common channel or signal based on configuration of an uplink resource and a downlink resource for the terminal.

According to any of items 1 to 6, there is provided a technique that enables a terminal to operate properly in a communication scheme in which both the terminal and a base station can perform transmission and reception simultaneously using the same resource. In particular, according to item 2, the resources at the time of initial access and after the initial access can be properly configured. According to item 4, the terminal can properly select a specific resource that is a resource of a cell-common channel or signal. According to item 5, it is possible to efficiently configure a parameter of a specific resource.

### <Supplementary note 2>

In relation to the second embodiment, at least a terminal and a communication system described in the following items 1 to 6 are provided.

### (Item 1)

A terminal including:
a communication unit configured to perform communication with a base station that can perform transmission and reception using a same resource; and
a control unit configured to determine whether a collision occurs between a first communication timing that is a communication timing of a first channel or a first signal and a second communication timing that is a communication timing of a second channel or a second signal,
wherein, when the collision occurs between the first communication timing and the second communication timing, the communication unit transmits or receives the first channel or the first signal and the second channel or the second signal simultaneously.

### (Item 2)

The terminal as described in item 1, wherein the control unit
determines that a collision occurs between the first communication timing and the second communication timing when there is an overlap between a time resource of the first channel or the first signal and a time resource of the second channel or the second signal, or
determines that a collision occurs between the first communication timing and the second communication timing when a time width between the time resource of the first channel or the first signal and the time resource of the second channel or the second signal is equal to or less than a threshold.

### (Item 3)

The terminal as described in item 1 or 2, wherein, when a collision occurs between the first communication timing and the second communication timing, the communication unit changes, from a transmission power at a non-collision time, a transmission power of at least one of the first channel or the first signal and the second channel or the second signal.

### (Item 4)

The terminal as described in any item of items 1 to 3, wherein, when a collision occurs between the first communication timing and the second communication timing, the communication unit changes, from a beam at a non-collision time, a beam of at least one of the first channel or the first signal and the second channel or the second signal.

### (Item 5)

A terminal including:
a communication unit configured to perform communication with a base station that can perform transmission and reception using a same resource; and
a control unit configured to determine whether a collision occurs between a first communication timing that is a communication timing of a first channel or a first signal and a second communication timing that is a communication timing of a second channel or a second signal,
wherein, when the collision occurs between the first communication timing and the second communication timing, the communication unit does not perform transmission and reception of at least one channel or signal based on a priority of the first channel or the first signal and a priority of the second channel or the second signal.

### (Item 6)

A communication system including:
a terminal including:
a communication unit configured to perform communication with a base station that can perform transmission and reception using a same resource; and
a control unit configured to determine whether a collision occurs between a first communication timing that is a communication timing of a first channel or a first signal and a second communication timing that is a communication timing of a second channel or a second signal,
wherein, when the collision occurs between the first communication timing and the second communication timing, the communication unit transmits or receives the first channel or the first signal and the second channel or the second signal simultaneously, and
the base station including:
   a transmission unit configured to notify or configure, for the terminal, an operation to perform when the collision occurs between the first communication timing and the second communication timing.

According to any of items 1 to 6, there is provided a technique that enables a terminal to operate properly in a communication scheme in which both the terminal and a base station can perform transmission and reception simultaneously using the same resource. In particular, according to item 2, it is possible to properly determine whether or not a collision has occurred. According to item 3, appropriate communication can be performed by changing the transmission power at the time of collision. According to item 4, appropriate communication can be performed by changing the beam at the time of collision.

### (Hardware Configuration)

The block diagrams (FIGS. 17 and 18) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the base station 10, the terminal 20 and the like in one embodiment of this disclosure may function as a computer for performing the processing of a radio communication method of this disclosure. FIG. 19 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 17 may be attained by a control program that is stored in the storage device 1002 and is operated by the processor 1001. Also, for example, the control unit 240 of the terminal 20 shown in FIG. 18 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

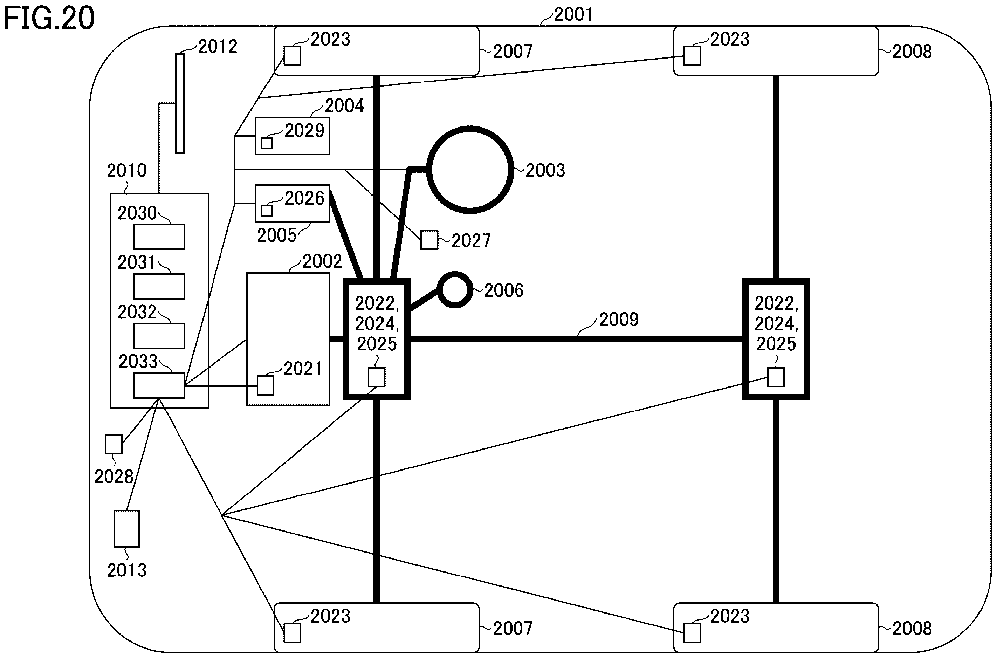

The terminal 20 or the base station 10 may be provided in a vehicle 2001. FIG. 20 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. For example, the functions of the terminal 20 may be incorporated in the communication module 2013. Also, for example, the functions of the base station 10 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, 4th generation mobile communication system (4G), 5th generation mobile communication system (5G), future radio access (FRA), new radio (NR), W-CDMA (Registered Trademark), GSM (Registered Trademark), CDMA2000, ultra mobile broadband (UMB), IEEE 802.11 (Wi-Fi (Registered Trademark)), IEEE 802.16 (WiMAX (Registered Trademark)), IEEE 802.20, ultra-wideband (UWB), Bluetooth (Registered Trademark), and other suitable systems and a next-generation system that is expanded, modified, generated or defined on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, AMF, SMF, LMF or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may be diffident for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a communication unit configured to communicate with a base station, that can perform transmission and reception using a same resource, based on configuration of an uplink resource and a downlink resource; and
a control unit configured to assume that a specific resource that is a resource of a cell-common channel or signal is notified or configured in accordance with the configuration.

2. The terminal as claimed in claim 1, wherein the specific resource for use at a time of initial access and the specific resource for use after initial access are notified or configured to the terminal using different methods.

3. The terminal as claimed in claim 1 or 2, wherein, when a plurality of specific resources, including the specific resource are notified or configured to the terminal, the control unit selects a specific resource to use among the plurality of specific resources based on the uplink resource or the downlink resource.

4. The terminal as claimed in any one of claims 1 to 3, wherein, after the specific resource is notified or configured to the terminal using a plurality of parameters, the communication unit receives a parameter related to the specific resource, and updates a portion of parameters among the plurality of parameters with the received parameter.

5. The terminal as claimed in any one of claims 1 to 4, wherein the control unit determines an uplink transmission timing without applying a TA offset.

6. A base station comprising:
a communication unit configured to perform transmission and reception with a terminal using a same resource with a terminal; and
a control unit configured to determine a specific resource that is a resource of a cell-common channel or signal based on configuration of an uplink resource and a downlink resource for the terminal.
